**Europäisches Patentamt**

**European Patent Office**

**Office européen des brevets**

(19)

(11) Veröffentlichungsnummer : **0 131 756**
**B1**

(12) # EUROPÄISCHE PATENTSCHRIFT

(45) Veröffentlichungstag der Patentschrift :
**11.11.87**

(51) Int. Cl.⁴ : **G 01 M   3/24, G 01 M   3/00,**
**G 10 K 15/04, G 21 C 17/00**

(21) Anmeldenummer : **84106700.2**

(22) Anmeldetag : **12.06.84**

(54) **Verfahren und Vorrichtung zum Überprüfen und/oder Kalibrieren von akustischen Überwachungseinrichtungen.**

(30) Priorität : **23.06.83. DE 3322625**

(43) Veröffentlichungstag der Anmeldung :
**23.01.85 Patentblatt 85/04**

(45) Bekanntmachung des Hinweises auf die Patenterteilung : **11.11.87 Patentblatt 87/46**

(84) Benannte Vertragsstaaten :
**AT BE CH DE FR GB IT LI LU NL SE**

(56) Entgegenhaltungen :
**DE-A- 2 654 849**
**US-A- 3 224 252**
**US-A- 4 064 735**

(73) Patentinhaber : **INTERATOM Gesellschaft mit bes-**
**chränkter Haftung**
**Friedrich-Ebert-Strasse**
**D-5060 Bergisch Gladbach 1 (DE)**

(72) Erfinder : **Arnaoutis, Nicolas, Dipl.-Phys.**
**Grünbergerstrasse 10**
**D-5063 Overath (DE)**
Erfinder : **Förster, Kunibert, Dipl.-Ing.**
**Am Kamp 7**
**D-5067 Kürten 3 (DE)**

(74) Vertreter : **Mehl, Ernst, Dipl.-Ing. et al**
**Postfach 22 01 76**
**D-8000 München 22 (DE)**

## Beschreibung

Die vorliegende Erfindung betrifft ein Verfahren nach dem Oberbegriff des Anspruchs 1 und eine Vorrichtung zur Durchführung dieses Verfahrens. In der Technik ist es inzwischen üblich, große Anlagenkomponenten auch akustisch zu überwachen. Dazu werden Schallaufnehmer an einer oder mehreren Stellen befestigt, welche in der Komponente auftretende Geräusche oder durch diese übertragene Geräusche registrieren und analysieren. Verschiedene Fehler, wie z. B. lose Teile, können so frühzeitig festgestellt werden. Insbesondere in der Reaktortechnik ist es üblich, Anlagenteile akustisch zu überwachen. Mit dieser Methode kann man Blasen und Siedegeräusche nachweisen, sowie Leckagen in Dampferzeugern feststellen. Dies ist besonders wichtig bei Dampferzeugern, in denen Wasser durch flüssiges Natrium aufgeheizt wird.

Zur Gewährleistung der Funktion der akustischen Meßketten ist ihre regelmäßige Überprüfung erforderlich. Bei schwer oder nicht zugänglichen Bereichen, z. B. in Kernkraftanlagen, muß die Überprüfung der Meßketten durch künstliche Erzeugung von Geräuschen erfolgen. Da solche Geräusche, beispielsweise durch Anschlagen der Struktur, nicht mit den später auftretenden Störfallgeräuschen übereinstimmen, ist die Überprüfung nur unvollkommen möglich. Auch eine elektronische Erzeugung von Prüfsignalen, wie sie beispielsweise in der DE-A-2 654 849 beschrieben ist, ermöglicht in Verbindung mit elektro-mechanischen Schallgebern keine genaue Simulation bezüglich Frequenzspektrum und Intensität von z. B. Blasengeräuschen.

Aufgabe der vorliegenden Erfindung ist ein Verfahren zum Überprüfen und/oder Kalibrieren von akustischen Überwachungseinrichtungen durch möglichst genaue Simulation von bei Störfällen auftretenden Blasengeräuschen, sowie eine Vorrichtung zur Durchführung des Verfahrens.

Zur Lösung dieser Aufgabe wird ein Verfahren nach dem Anspruch 1 vorgeschlagen. Dazu wird an eine Komponente, die mit akustischen Überwachungseinrichtungen, z. B. einem oder mehreren akustischen Wandlern, bestückt ist, eine Schallquelle akustisch angekoppelt. Dies kann an einer oder nacheinander an mehreren Stellen geschehen. In der Schallquelle wird das von der Überwachungseinrichtung zu detektierende Blasengeräusch simuliert. Das simulierte Schallereignis wird von den Überwachungseinrichtungen empfangen und dient zur Kalibrierung oder Überprüfung. Es sind verschiedene Schallereignisse denkbar, an die die Schallquelle mit ihren Eigenschaften angepaßt werden kann. Die Erfindung geht von dem Gedanken aus, daß im Prinzip jedes Blasengeräusch in einer kleinen, an die Komponente ankoppelbaren Schallquelle simuliert werden kann, wodurch eine sehr viel genauere Überprüfung und Kalibrierung der Überwachungseinrichtungen als bisher möglich wird. Dabei genügen zur hinreichend genauen Simulation der Schallereignisse unter Umständen auch andere Medien und gegebenenfalls etwas abweichende Bedingungen als in der Komponente herrschen.

Im Anspruch 2 wird insbesondere eine Lösung für den Fall vorgeschlagen, daß die zu überwachende Komponente ein Dampferzeuger, speziell ein Natrium-Wasser-Wärmetauscher, ist. Das dort wichtigste zu detektierende Schallsignal ist ein Leckagegeräusch, da Leckagen wegen der Natrium-Wasser-Reaktion möglichst schnell erkannt werden sollen.

Gemäß dem vorgeschlagenen Verfahren wird in der Schallquelle ein Gas durch eine Düse in eine Flüssigkeit geblasen und zwar unter ähnlichen Bedingungen von Druck und anderen Parametern, wie sie in der Komponente herrschen. Auf diese Weise wird ziemlich genau das Auftreten eines Lecks im Dampferzeuger simuliert. Es hat sich gezeigt, daß die für das Frequenzspektrum der entstehenden Geräusche verantwortlichen Bedingungen hinreichend genau simuliert werden, wenn ein Gas mit entsprechendem Druck in eine Flüssigkeit geblasen wird. Als geeignete Gase haben sich Inertgase wie z. B. Helium, Argon oder Stickstoff erwiesen. Als Flüssigkeit kommt z. B. Wasser, Öl oder auch Natrium, eventuell mit Kalium, in Frage. Durch geeignete Veränderung des Gasdrucks können die unterschiedlichen Eigenschaften dieser Medien gegenüber denen im Dampferzeuger kompensiert werden, wobei außerdem die Größe der Lecks durch den Durchmesser der Düse simuliert werden kann. Für die Simulation von Dampferzeugerleckagen haben sich Düsen von etwa 0,1 bis 2,0 mm als geeignet erwiesen. Die beim Austritt des Gases aus der Düse in die Flüssigkeit entstehenden Geräusche können über das Gaseinspeisesystem und ein Koppelstück auf die Komponente übertragen werden. Diese Geräusche dienen dann zur Kalibrierung der Überwachungseinrichtung, insbesondere zur Einstellung von Empfindlichkeit, zur Ermittlung von Frequenzspektren der Geräusche und als Referenz für Laufzeitmessungen zur Lokalisierung von Lecks. Dieses Verfahren hat den Vorteil, daß auch die Funktion der Störfallanalysegeräte, und nicht nur die Funktion der akustischen Meßaufnehmer an der Komponente, getestet und kalibriert werden kann.

Im Anspruch 3 wird eine Vorrichtung zur Durchführung des beschriebenen Verfahrens vorgeschlagen. Die Vorrichtung besteht aus einem Flüssigkeitsbehälter, in den eine Düse für die Einspeisung von, gegebenenfalls unter hohem Druck stehendem Gas mündet. Die Düse ist die Fortsetzung eines Formteiles, welches an einer Seite über ein Koppelstück akustisch an die Komponente angekoppelt ist. Die Durchführung des Formteiles durch die Wand des Flüssigkeitsbehälters ist dicht und mechanisch fest. Außerdem wird durch das Formteil Gas von einem Vorratsbehälter zu der Düse geleitet. Diese Vorrichtung ermöglicht einerseits die Einspeisung von Gas und andererseits die möglichst verlustfreie Übertragung der entstehenden Blasengeräusche auf die Komponente.

Im Anspruch 4 wird in weiterer Ausgestaltung der Erfindung vorgeschlagen, daß das Formteil im wesentlichen T-förmig ist, wobei die Zuleitung des Gases durch den Querkanal des Formteiles erfolgt. Das eine Ende des Längskanals des Formteiles ist verschlossen und bildet eine Anschlußmöglichkeit zur akustischen Ankopplung an die Komponente. Das andere Ende des Längskanals steht mit dem Querkanal in Verbindung und ist durch die Wand des Flüssigkeitsbehälters in einer festen Verbindung durchgeführt und endet in einer Düse. Durch die Verwendung eines T-förmigen Formteiles läßt sich gleichzeitig die Einspeisung von Gas und die akustische Übertragung der Düsengeräusche günstig bewerkstelligen. Da die Geräusche an der Düse sich im wesentlichen nach rückwärts fortpflanzen, erweist sich die T-förmige Ausführung in der beschriebenen Form als besonders geeignet.

Zusätzlich wird im Anspruch 5 vorgeschlagen, daß Düse, T-förmiges Formteil und Koppelstück aus gut schalleitendem, metallischem Material bestehen und mechanisch direkt ohne schallabsorbierende oder -reflektierende Abdichtungen untereinander verbunden sind. Durch den direkten metallischen Kontakt wird der erzeugte Schall mit den geringstmöglichen Verlusten von der Düse auf die zu überwachende Komponente übertragen.

In spezieller Ausgestaltung der Erfindung wird in den Ansprüchen 6 und 7 vorgeschlagen, daß die Düse in dem Flüssigkeitsbehälter auswechselbar ist, vorzugsweise mit einer Schraubverbindung an das T-förmige Formteil anschließbar. Auf diese Weise ist es möglich, durch bloßes Auswechseln der Düse schnell hintereinander mehrere verschieden große Leckagen zu simulieren.

Im Anspruch 8 wird zusätzlich vorgeschlagen, daß die Gaszuleitung zu dem T-förmigen Formteil ebenfalls über eine Schraubverbindung erfolgt, wobei gemäß Anspruch 9 in der Zuleitung ein Absperrventil vorhanden sein kann. Diese Maßnahme erhöht die Flexibilität beim Einsatz der Vorrichtung.

In besonderer Ausgestaltung der Erfindung wird im Anspruch 10 außerdem vorgeschlagen, daß der Flüssigkeitsbehälter aus einem durchsichtigen Material bestehen soll. Dies ist natürlich nur bei bestimmten Medien (z. B. Wasser, Öl) und nur bis zu gewissen Höchstdrücken möglich, jedoch hat diese Ausgestaltung den Vorteil, daß die Funktion der Vorrichtung, d. h. das Austreten der Blasen aus der Düse, leicht überprüfbar ist. Bei chemisch aggressiven oder opaken Medien ist ein Behälter z. B. aus Stahl erforderlich.

Nach Anspruch 11 steht der Flüssigkeitsbehälter mit einem Ausgleichsgefäß in Verbindung, welches ein Entlastungsventil besitzt, oder er weist ein Entlastungssieb oberhalb des Flüssigkeitsspiegels auf. Diese beiden Maßnahmen ermöglichen eine problemlose Abführung der aus der Düse in die Flüssigkeit ausgetretenen Gase.

Weiterhin wird vorgeschlagen, daß die ganze Vorrichtung transportabel ausgestaltet sein soll, beispielsweise tragbar in einem Gestell oder auf einem Wagen angeordnet, und daß sie zur Ankopplung an verschiedene Koppelstellen geeignet sein soll, wobei gemäß Anspruch 12 der Flüssigkeitsbehälter von dem Formteil nach dem Ankoppeln an die Komponente frei getragen wird. Die Verbindungen zum Gasvorratsbehälter und zum Ausgleichsbehälter können dagegen flexibel gestaltet sein. Diese Maßnahme ermöglicht einen Einsatz an verschiedenen Stellen und verschiedenen Komponenten, wobei die Koppelstellen natürlich so ausgestaltet sein können, daß die Vorrichtung anstelle eines sonst vorhandenen akustischen Aufnehmers an die Komponente angekoppelt wird.

Im Anspruch 13 wird schließlich vorgeschlagen, daß Koppelstück mit kräftigen magnetischen Halterungen zu versehen, wodurch der Einsatz der Vorrichtung und das Ankoppeln an die Komponente noch einfacher gestaltet wird. Diese Version ist bei austenitischen Werkstoffen allerdings nicht anwendbar.

In der Zeichnung werden die wesentlichen Teile der Erfindung dargestellt und zwar zeigt

Fig. 1 in halbschematischer Darstellung den Aufbau der Vorrichtung und

Fig. 2 ein Ausführungsbeispiel der erfindungsgemäßen Kalibrier-Schallquelle.

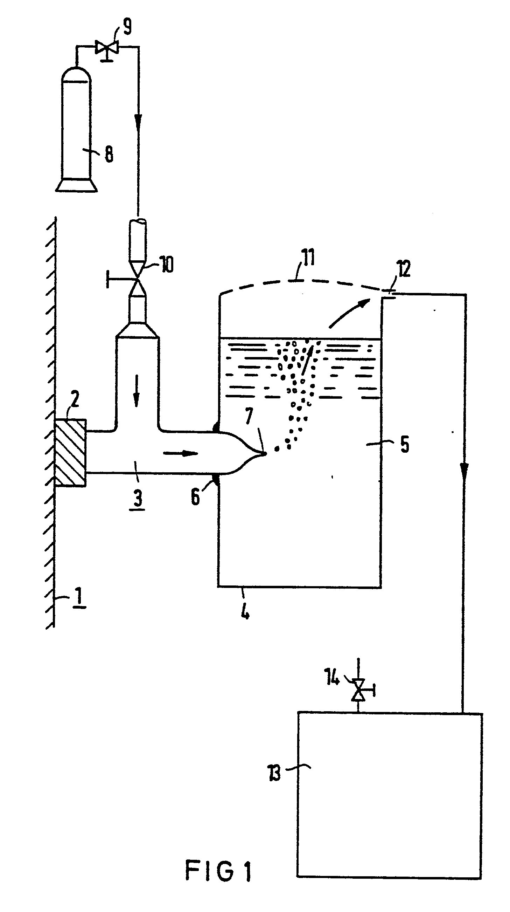

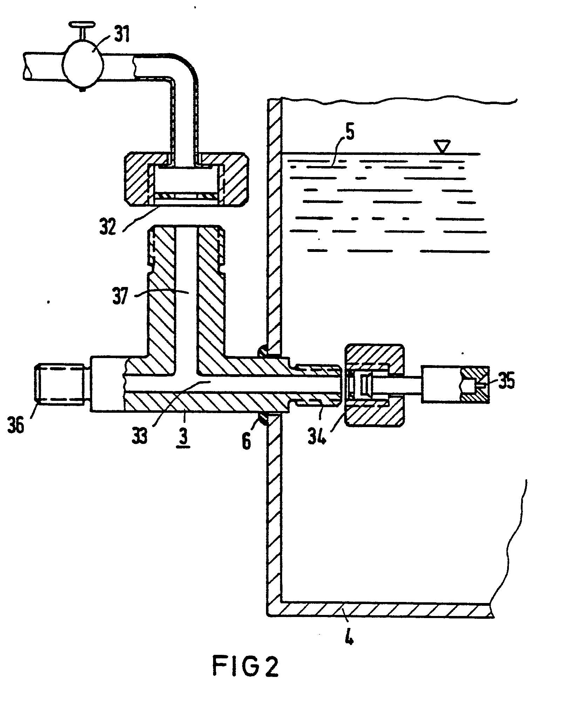

In Fig. 1 ist die Wand einer Komponente 1 dargestellt, an welcher über ein Koppelstück 2 die Schallquelle angekoppelt ist. Diese besteht aus einem Behälter 4 mit einer Flüssigkeit 5, in welchen Gas durch eine Düse 7 eingeblasen werden kann. Das Gas gelangt aus einem Vorratsbehälter 8 eventuell über Drossel- und/oder Absperrventile 9 und 10 in ein Formteil 3, welches ungefähr T-förmig ausgestaltet ist und in Fig. 2 näher beschrieben wird. Das Formteil 3 ist durch die Wand des Behälters 4 in einer mechanisch stabilen Dichtung 6 durchgeführt und endet in einer Düse 7, durch welche das Gas in die Flüssigkeit geblasen wird. Von dort entweicht das Gas entweder durch ein Entlastungssieb 11 oder gelangt über eine Leitung 12 zu einem Ausgleichsbehälter 13 mit Entlastungsventil 14.

Fig. 2 zeigt das T-förmige Formteil 3 und Teile der übrigen Vorrichtung. Das T-förmige Formteil 3 weist an dem einen Ende seines Längskanals 33 einen Abschluß auf, welcher eine Anschlußmöglichkeit 36 zur akustischen Ankopplung an die Komponente 1 bildet. Durch den Querkanal 37 wird Gas zugeführt, welches durch das andere Ende des Längskanals 33, welches in einer Befestigung 6 durch die Wand des Flüssigkeitsbehälters 4 hindurchgeführt ist, zu einer Düse 35 gelangt. Die Düse 35 ist auswechselbar an dem Ende des T-förmigen Formteiles 3 befestigt, beispielsweise mit einem Gewinde und einer Überwurfmutter 34. Auch die Zuführung des Gases zu dem Querkanal 37 kann über eine Schraubverbindung 32 erfolgen. Mit einem Kugelventil 31 kann die Gaszufuhr geregelt werden.

Natürlich sind verschiedene Ausführungen der erfindungsgemäßen Vorrichtung möglich, jedoch ist darauf zu achten, daß der Schall sich im wesentlichen von der Düse 35 aus nach rückwärts fortpflanzt, so daß die Ankoppeleinrichtung 36 möglichst in Gegenrichtung zu dem in die Flüssigkeit 5 eingeblasenen Gasstrahl liegen sollte. Als Koppelverbindungen lassen sich Gewindeverbindungen oder Magnetverbindungen vorstellen.

**Patentansprüche**

1. Verfahren zum Kalibrieren und/oder Überprüfen von akustischen Überwachungseinrichtungen eines eine erste Flüssigkeit enthaltenden Behälters und/oder eines Rohrsystems, wobei die Überwachungseinrichtungen aus einem oder mehreren akustischen Wandlern bestehen, welche an den Behälter bzw. das Rohrleitungssystem akustisch angekoppelt sind, wobei eine Schallquelle (3, 4) an einer oder nacheinander an mehreren Stellen des zu überwachenden Behälters (1) und/oder Rohrsystems akustisch angekoppelt wird und wobei in der Schallquelle (3, 4) ein von der Überwachungseinrichtung detektierbares Schallereignis erzeugt und von den Überwachungseinrichtungen empfangen wird, gekennzeichnet durch folgende Merkmale :

a) Zur möglichst genauen Simulation von Blasengeräuschen wird in der Schallquelle (3, 4) Gas durch eine Düse (7) in eine zweite Flüssigkeit (5) geblasen, und zwar unter ähnlichen Bedingungen von Druck und anderen Parametern, wie sie in dem Behälter bzw. Rohrsystem herrschen.

b) Die beim Austritt des Gases aus der Düse (7) in die zweite Flüssigkeit (5) entstehenden Geräusche werden über das Gaseinspeisesystem (3) und ein Koppelstück (2) auf den Behälter bzw. das Rohrsystem übertragen und dienen zur Überwachung und/oder Einstellung und/oder Kalibrierung der Überwachungseinrichtung und/oder als Referenz für Laufzeitmessungen zur Lokalisierung des Entstehungsortes der im Behälter bzw. Rohrsystem eventuell auftretenden Blasengeräusche.

2. Verfahren nach Anspruch 1, dadurch gekennzeichnet, daß die Schallquelle (3, 4) Leckagegeräusche bei Dampferzeugern und/oder Natrium-Wasser-Wärmetauschern durch Einspritzung von unter hohem Druck stehenden Gas in die unter niedrigem Druck stehende zweite Flüssigkeit erzeugt.

3. Vorrichtung zur Simulation von Blasengeräuschen und Ankopplung dieser Geräusche an eine Komponente (1) zum Kalibrieren und/oder Überprüfen von akustischen Überwachungseinrichtungen an dieser Komponente (1), insbesondere zur Durchführung des Verfahrens nach Anspruch 1 oder 2, gekennzeichnet durch folgende Merkmale :

a) Die Vorrichtung besteht aus einem Flüssigkeitsbehälter (4), in den eine Düse (7) für die Einspeisung von, ggf. unter hohem Druck stehendem Gas mündet.

b) Die Düse (7) ist die Fortsetzung eines Formteiles (3), welches an einer Seite über ein Koppelstück (2) akustisch an die Komponente (1) angekoppelt ist.

c) Die Durchführung (6) des Formteiles (3) durch die Wand des Flüssigkeitsbehälters (4) ist dicht und mechanisch fest.

d) Das Formteil ist mit einem das Gas enthaltenden Vorratsbehälter (8) verbunden.

4. Vorrichtung nach Anspruch 3, gekennzeichnet durch folgende Merkmale :

a) Das Formteil (3) ist im wesentlichen T-förmig, wobei die Zuleitung des Gases durch den Querkanal (37) des Formteiles erfolgt.

b) Das eine Ende (36) des Längskanals (33) des Formteiles ist verschlossen und bildet eine Anschlußmöglichkeit (36) zur akustischen Ankopplung an die Komponente (1)

c) Das andere Ende des Längskanals (33) steht mit dem Querkanal (37) in Verbindung, ist durch die Wand des Flüssigkeitsbehälters (4) in einer festen Verbindung (6) durchgeführt und führt zu der Düse (35).

5. Vorrichtung nach Anspruch 3 oder 4, gekennzeichnet durch folgende Merkmale :

a) Düse (7), Formteil (3) und Koppelstück (2) bestehen aus gut schalleitenden, metallischen Materialien.

b) Diese Teile sind mechanisch direkt ohne schallabsorbierende oder -reflektierende Abdichtungen untereinander verbunden.

6. Vorrichtung nach Anspruch 3, 4 oder 5, dadurch gekennzeichnet, daß die Düse (35) auswechselbar ist.

7. Vorrichtung nach Anspruch 6, dadurch gekennzeichnet, daß die Düse (35) durch eine Schraubverbindung (34) mit dem Formteil (3) verbunden ist.

8. Vorrichtung nach Anspruch 3, 4, 5, 6 oder 7, dadurch gekennzeichnet, daß die Gaszuleitung vom Vorratsbehälter (8) mittels einer Schraubverbindung (32) am Formteil (3) befestigt ist.

9. Vorrichtung nach einem der Ansprüche 3 bis 8, dadurch gekennzeichnet, daß in der Gaszuleitung ein Absperrventil (31) vorhanden ist.

10. Vorrichtung nach einem der Ansprüche 3 bis 9, dadurch gekennzeichnet, daß der Flüssigkeitsbehälter (4) aus einem durchsichtigen Material besteht.

11. Vorrichtung nach einem der Ansprüche 3 bis 10, dadurch gekennzeichnet, daß der Flüssigkeitsbehälter (4) mit einem Ausgleichsgefäß (13) in Verbindung steht oder ein Entlastungssieb (11) aufweist.

12. Vorrichtung nach einem der Ansprüche 3 bis 11, dadurch gekennzeichnet, daß der Flüssigkeitsbehälter (4) von dem Formteil (3) frei getragen wird.

13. Vorrichtung nach einem der Ansprüche 3 bis 12, dadurch gekennzeichnet, daß das Koppelstück (2) mit magnetischen Halterungen versehen ist.

**Claims**

1. A method of calibrating and/or checking acoustical surveillance devices of a container containing a first liquid and/or of a piping system, wherein the surveillance devices consist of one or more acoustic transducers which are acoustically coupled to the container or to the piping system wherein a sound source (3, 4) is acoustically coupled to one place or consecutively to a plurality of places on the container (1) or the piping system, as the case may be, which is to be monitored, and wherein an acoustic phenomenon which is detectable by the surveillance device is generated in the sound source (3, 4) and received by the surveillance devices, characterised by the following features :

a) for the most accurate simulation of blowing noises possible, gas is blown through a nozzle (7) into a second liquid (5) in the sound source (3, 4), under similar conditions of pressure and other parameters to those prevailing in the vessel or piping system,

b) the noises arising when the gas emerges from the nozzle (7) into the second liquid (5) are transmitted to the vessel or piping system via the gas-feed system (3) and a coupling piece (2) and are used for supervising and/or control and/or calibration of the surveillance device and/or as a reference for transit time measurements for the purpose of locating the source of blowing noises which may occur in the vessel or piping system.

2. A method as claimed in Claim 1, characterised in that the sound source (3, 4) generates leakage noises· in steam generators and/or sodium-water heat exchangers by injecting gas under high pressure into the second liquid which is under low pressure.

3. Apparatus for simulating blowing noises and for coupling these noises to a component (1) for calibrating and/or checking acoustic surveillance devices on this component (1), particularly for carrying out the method as claimed in Claim 1 or 2, characterised by the following features :

a) the apparatus consists of a liquid container (4), into which opens a nozzle (7) for feeding in gas, when necessary under high pressure,

b) the nozzle (7) is the continuation of a moulded part (3) which is acoustically coupled on one side to the component (1) through a coupling piece (2),

c) the passage (6) for the moulded part (3) through the wall of the liquid container (4) is sealed and mechanically secure,

d) the moulded part is connected to a storage vessel (8) containing the gas.

4. Apparatus as claimed in Claim 3, characterised by the following features :

a) the moulded part (3) is essentially T-shaped, the supply of gas takes place through the transverse channel (37) of the moulded part (3),

b) one end (36) of the longitudinal channel (33) of the moulded part (3) is closed and constitutes a connection possibility for the acoustic coupling to the component (1),

c) the other end of the longitudinal channel (33) is connected to the transverse channel (37), led through the wall of the liquid container (4) by a fixed connection (6) and leads to the nozzle (35).

5. Apparatus as claimed in Claim 3 or 4, characterised by the following features :

a) the nozzle (7), moulded part (3), and coupling piece (2) are made of metallic materials which are good conductors of sound,

b) these parts are mechanically directly connected with one another without sound-absorbing or sound-reflecting sealings.

6. Apparatus as claimed in Claim 3, 4 or 5, characterised in that the nozzle (35) is exchangeable.

7. Apparatus as claimed in Claim 6, characterised in that the nozzle (35) is connected to the moulded part (3) by a screw connection (34).

8. Apparatus as claimed in Claim 3, 4, 5, 6 or 7, characterised in that the gas supply from the storage vessel (8) is fixed to the moulded part (3) by means of a screw connection (32).

9. Apparatus as claimed in one of Claims 3 to 8, characterised in that a shut-off valve (31) is provided in the gas supply line.

10. Apparatus as claimed in one of Claims 3 to 9, characterised in that the liquid container (4) is made of transparent material.

11. Apparatus as claimed in one of Claims 3 to 10, characterised in that the liquid container (4) is connected to an equalising vessel (13) or has a discharge sieve (11).

12. Apparatus as claimed in one of Claims 3 to 11, characterised in that the liquid container (4) is freely supported from the moulded part (3).

13. Apparatus as claimed in one of Claims 3 to 12, characterised in that the coupling piece (2) is provided with magnetic mountings.

**Revendications**

1. Procédé d'étalonnage et/ou de contrôle de dispositifs acoustiques de surveillance d'un récipient contenant un premier liquide et/ou d'un système de tubes, les dispositifs de surveillance étant constitués par un ou plusieurs transducteurs acoustiques qui sont couplés acoustiquement au récipient ou au système de conduits tubulaires, et selon lequel on couple acoustiquement une source acoustique (3, 4) en un ou successivement en plusieurs emplacements du récipient (1) à contrôler et/ou du système de tubes et selon lequel un phénomène acoustique, pouvant être détecté par le dispositif de surveillance, est produit dans la source acoustique (3, 4) et est reçu par les dispositifs de surveillance, caractérisé par les particularités suivantes :

a) pour réaliser la simulation aussi précise que possible de bruits provoqués par des bulles, dans la source acoustique (3, 4) on injecte un gaz au moyen d'une buse (7) dans un second liquide (5), et ce dans des conditions de pression et d'autres paramètres, ressemblantes à celles qui sont présentes dans le récipient ou le système de tubes ;

b) les bruits qui apparaissent lors de la sortie du gaz de la buse (7) dans le second liquide (5) sont transmis par l'intermédiaire du système d'injection de gaz (3) et d'un organe de couplage (2) au récipient ou au système de tubes et servent à contrôler/ou régler/ou étalonner le dispositif de surveillance et/ou servent de référence pour des mesures de temps de transit de manière à localiser le lieu d'apparition des bruits dus aux bulles et apparaissant éventuellement dans le récipient ou dans le système de tubes.

2. Procédé suivant la revendication 1, caractérisé par le fait que la source acoustique (3, 4) produit des bruits de fuite dans des générateurs de vapeur et/ou des échangeurs de chaleur fonctionnant au sodium et à l'eau, au moyen de l'injection d'un gaz sous pression élevée dans le second liquide à basse pression.

3. Dispositif pour simuler des bruits produits par des bulles et transmettre par couplage ces bruits à un composant (1) pour l'étalonnage et/ou le contrôle de dispositifs acoustiques de surveillance placés sur ce composant (1), notamment pour la mise en œuvre du procédé suivant la revendication 1 ou 2, caractérisé par les particularités suivantes :

a) le dispositif est constitué par un récipient pour liquide (4), dans lequel débouche une buse (7) servant à injecter un gaz éventuellement sous pression élevée ;

b) la buse (7) est le prolongement d'une pièce de forme (3), qui, sur un côté, est couplée acoustiquement au composant (1) par l'intermédiaire d'un organe de couplage (2) ;

c) la traversée (6) de la pièce de forme (3) dans la paroi du récipient liquide (4) est étanche et mécaniquement rigide ;

d) la pièce de forme est reliée à un réservoir (8) contenant le gaz.

4. Dispositif suivant la revendication 3, caractérisé par les particularités suivantes :

a) la pièce de forme (3) possède essentiellement une forme de T, l'amenée du gaz s'effectuant au moyen du canal transversal (37) de la pièce de forme ;

b) une extrémité (36) du canal longitudinal (33) de la pièce de forme est fermée et fournit une possibilité de raccordement (36) pour réaliser le couplage acoustique avec le compartiment (1)

c) L'autre extrémité du canal longitudinal (33) est reliée au canal transversal (37), traverse la paroi du récipient pour liquide (4) selon une liaison rigide (6) et aboutit à la buse (35).

5. Dispositif suivant la revendication 3 ou 4, caractérisé par les particularités suivantes :

a) la buse (7), la pièce de forme (3) et l'organe de couplage (2) sont constitués en des matériaux métalliques présentant une bonne conduction acoustique ; et

b) ces éléments sont reliés directement entre eux mécaniquement sans l'interposition de garnitures d'étanchéité réalisant une absorption ou une réflexion acoustique.

6. Dispositif suivant la revendication 3, 4, 5, caractérisé par le fait que la buse (35) est interchangeable.

7. Dispositif suivant la revendication 6, caractérisé par le fait que la buse (35) est reliée par une liaison vissée (34) à la pièce de forme (3).

8. Dispositif suivant la revendication 3, 4, 5, 6 ou 7, caractérisé par le fait que la canalisation d'amenée du gaz à partir du réservoir (8) est fixée au moyen d'une liaison vissée (32) à la pièce de forme (3).

9. Dispositif suivant l'une des revendications 3 à 8, caractérisé par le fait qu'une vanne d'arrêt (31) est présente dans la canalisation d'amenée du gaz.

10. Dispositif suivant l'une des revendications 3 à 9, caractérisé par le fait que le réservoir pour liquide (4) est constitué en un matériau transparent.

11. Dispositif suivant l'une des revendications 3 à 10, caractérisé par le fait que le récipient pour liquide (4) est relié à un récipient de compensation (13) ou comporte un tamis d'évacuation (11).

12. Dispositif suivant l'une des revendications 3 à 11, caractérisé par le fait que le récipient pour liquide (4) est supporté en porte-à-faux par la pièce de forme (3).

13. Dispositif suivant l'une des revendications 3 à 12, caractérisé par le fait que l'organe de couplage (2) comporte des dispositifs de retenue magnétiques.

FIG 1

FIG 2